# EUROPEAN PATENT APPLICATION

(11) **EP 2 711 581 A1**
(43) Date of publication of application: **26.03.2014**
(21) Application number: 13180193.8
(22) Date of filing: 13.08.2013
(51) Int. Cl.: F16D 41/32

(54) **Hub for bicycle wheels**

(30) Priority: 20.09.2012 IT PN20120052
(71) Applicant: Alchemist S.r.l., 33100 Udine (IT)
(72) Inventor: Marcorin, Sandro, 30020 Torre di Mosto (VE) (IT)
(74) Representative: Gonella, Mario

(57) **Abstract**

The present invention refers to a hub for bicycle wheels comprising a freewheel body (102) adapted to be coupled to a central body (3) by means of a coupling device comprising one or more coupling elements (105) associated to the freewheel body (102) and engageable with respective teeth (110) of a crown gear (107) integral with said central body (3); thrust means (106) are provided to maintain the coupling elements (105) engaged with said teeth (110); said coupling elements (105) are slidably accommodated within respective rectilinear seats (109) provided on the freewheel body (102) and are adapted to slide along said seats (109) against the action of said thrust means (106) between an engagement position and a disengagement position with respect to said teeth (110).

## Description

### TECHNICAL FIELD OF INVENTION

The present invention is relative to a hub for bicycle wheels, in particular a hub for the driving wheel, generally the rear wheel, of bicycles of freewheel type.

### STATE OF THE ART

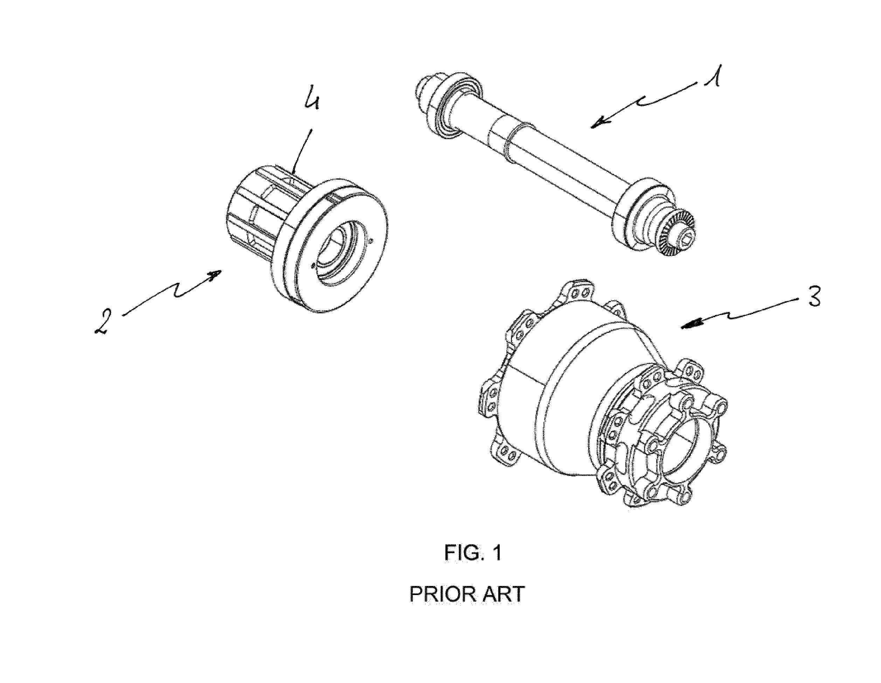

The rear hub of a bicycle is made up essentially of three parts, as shown in fig. 1: a central pin 1 which makes it possible to fasten the rear wheel to the bicycle and defines an axis on which the hub rotates; a freewheel body 2 having the function of transmitting, through known linkwork systems, the rotational motion applied through the pedals to the wheel to allow the free rotation in idle mode of the wheel in the absence of power transmitted through the pedals, and a central body 3 comprising the flanges to which the spokes are connected to transfer the rotation of the hub to the rim of the wheel.

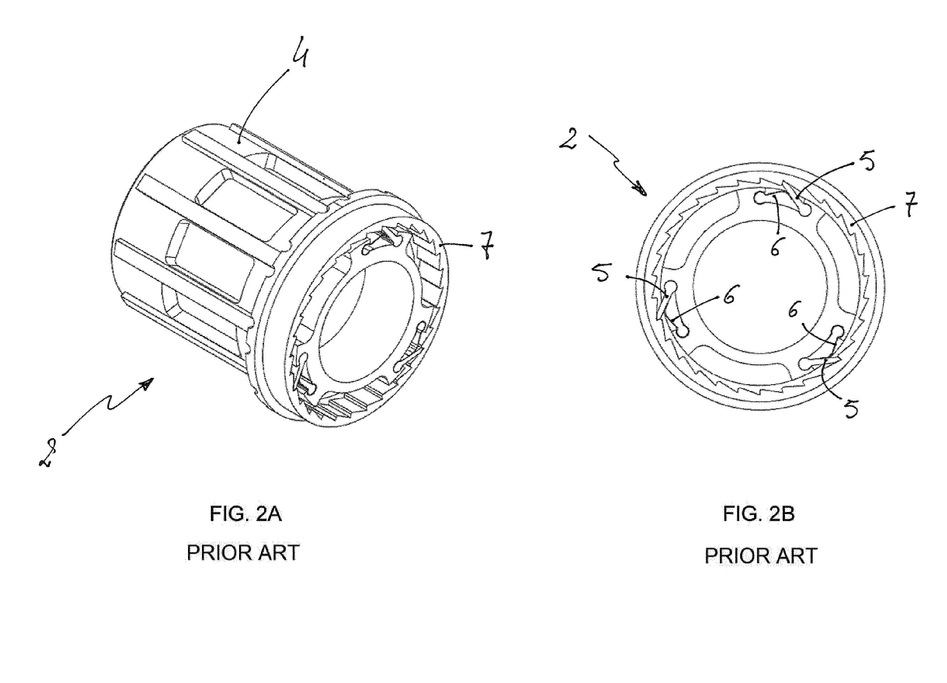

Generally, referring to figures 2A and 2B, the prior art freewheel bodies are made up of an external body 4 on which is mounted the cassette, that is, the set of sprocket wheels that form part of the shift control device, and a coupling system capable of changing the force of the pedal stroke to a movement of rotation of the driving wheel.

The coupling systems are generally made up of coupling elements 5, such as pawls, hinged circumferentially to the freewheel body 2 and swinging in opposition to elastically deformable means 6, such as a flat spring or equivalent means. The elastically deformable means 6 thrust the coupling elements 5 into engagement with a crown gear 7 integral with the central body 3. In figures 2A and 2B, the crown gear 7 is shown associated to the freewheel body 2 in order to better understand the operation of the system. In this manner, a counterclockwise rotation, referring to fig. 2B, applied by the pedals to the freewheel body 2 causes the engagement of the coupling elements 5 with the teeth on the crown gear 7, thereby rotating the central body 3 with which the crown gear 7 forms an integral part. In this manner, the force of the pedal stroke is transferred to the driving wheel of the bicycle. Vice versa, when the pedal stroke is interrupted and thus there is no transfer of power, the freewheel body 2 remains still and the central body 3 can rotate freely in the idle mode because the coupling elements 5 are disengaged from the teeth of the crown gear 7, in opposition to the action of the elastically deformable means 6 due to the effect of the inclined plane configuration of the teeth in the crown gear 7.

The force produced by the transmission of the pedal stroke is thus applied to the coupling elements 5, which are thus subject to a peak axial load that generates on each individual element 5 a high compression force.

In addition, the optimal operation and the duration of the coupling system are closely connected to the quality, understood as the characteristics of resistance and capacity of maintaining unchanged in time the elastic characteristics, of the type of springs used to provide the elastic opposition to the coupling elements so as to guarantee that the latter are maintained in contact with the crown gear.

### SUMMARY OF THE INVENTION

The main objective of the subject matter of the present invention is to provide a hub for bicycle wheels having an improved operation with respect to the prior art solutions.

In the scope of the above objective, one purpose is to provide a hub whose components, in particular the coupling system, have high characteristics of reliability and long life.

Another purpose of the present invention is to devise a hub capable of offering improved performance characteristics with respect to the existing solutions.

One not least important objective is to devise a hub for bicycle wheels capable of accomplishing the above task and objectives at an economically advantageous price and achievable by means of the usual well-known plants, machinery and equipment.

The above purpose and objectives, and others that will be more evident below, are achieved with a hub for bicycle wheels as defined in claim 1.

### BRIEF DESCRIPTION OF THE DRAWINGS

Further characteristics and the advantages of a hub for bicycle wheels according to the present invention will become more evident from the following description of a particular, but not exclusive, embodiment illustrated purely by way of example without limitations with reference to the following figures:
- figure 1 illustrates, in a perspective exploded view, the components of a hub belonging to the prior art described above;
- figures 2A and 2B are respectively a perspective view and a front elevation of a component of the hub, specifically the freewheel body to which the crown gear is associated, belonging to the prior art illustrated in figure 1;
- figures 3A and 3B illustrate, respectively in a perspective view and a front elevation, a freewheel body provided with a coupling device that is an integral part of a hub according to the present invention.

### DETAILED DESCRIPTION OF THE INVENTION

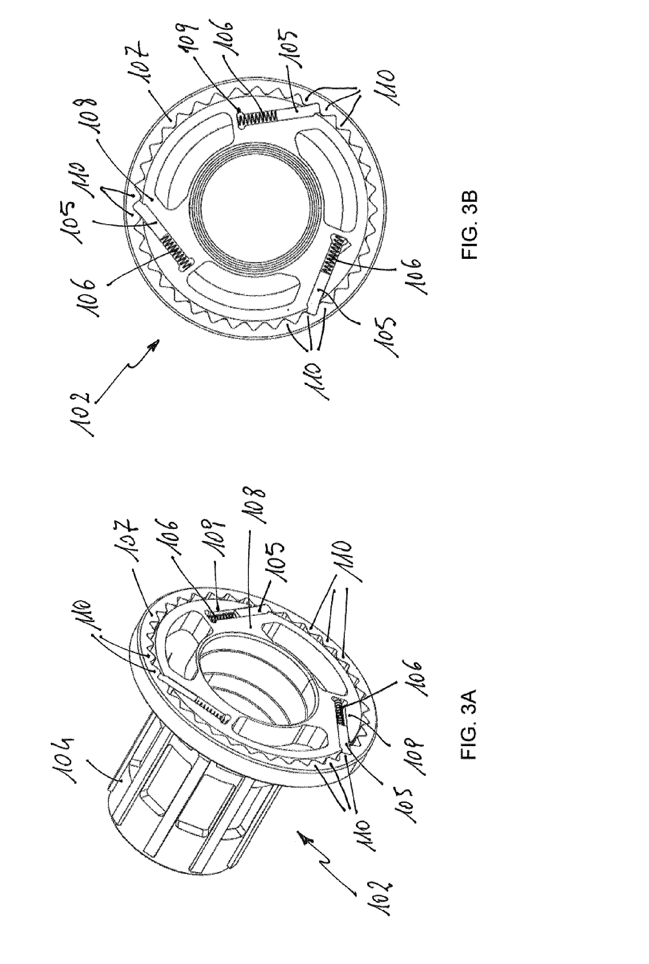

With reference to the previously mentioned figures, a hub for bicycle wheels according to the present invention includes a central pin 1 (fig. 1) that makes it possible to fasten the rear wheel to the bicycle and defines an axis about which the hub rotates, a freewheel body 102 (figures 3A, 3B) that performs the function of transmitting the rotation movement applied by the pedals to the wheel, allowing the free rotation in idle mode of the latter in the absence of power transmitted by the pedals, and a central body 3 (fig. 1) comprising the flanges on which are connected the spokes that make it possible to transfer the rotation of the hub to the rim of the wheel.

The freewheel body 102 consists essentially of an external body 104 on which is engaged the cassette, that is, the set of sprocket wheels forming a part of the shift control device, and of a disk 108 in which are accommodated one or more coupling elements 105 within respective and suitable rectilinear seats 109 formed peripherally on the disk 108. Each coupling element 105 is housed and able to slide in and along the respective seat 109 against the action of thrust means 106.

The coupling elements 105 consist of small blocks essentially in an elongate parallelepiped shape and are adapted to engage the teeth of a crown gear 107 integral with the central body 3. The teeth 110 of the crown gear 107 are advantageously configured in the shape of isosceles triangles so as to form an angle of about 90° between two adjacent teeth. The longitudinal axis of the seats 109 is inclined with respect to the teeth of the crown gear 107, so that the surface of the head of an coupling element 105 can abut against the surface of one of the inclined sides of the engaged tooth 110 and a lateral portion of the coupling element 105 adjacent to the surface of the head can rest against the inclined side of the tooth adjacent to the engaged tooth, as shown for example in fig. 3B.

The thrust means 106 have the function of maintaining the coupling elements 105 in contact with the teeth 110 of the crown gear 107, and may consist of an elastically deformable element such as a compression spring acting on each coupling element 105.

The unit comprising the coupling elements 105, the thrust means 106 and the crown gear 107 forms a coupling device capable of transmitting the rotational movement applied by the pedal stroke to the driving wheel, generally the rear wheel, and of allowing the free rotation of said wheel in the direction of travel in the absence of pedal strokes.

The operation of the coupling device is as follows: a clockwise rotation, according to the reference of fig. 3B, applied by the pedals to the freewheel body 102 through a prior art sprocket-chain linkwork system causes the engagement between the coupling elements 105 and a respective tooth 110 of the crown gear 107, thus driving into rotation the central body 3 with which the crown gear 107 forms an integral part. In this manner, the power applied by the pedal stroke is transmitted to the driving wheel of the bicycle thanks to the effect of the rotation of the freewheel body 102 integral with the rotation of the central body 3 accomplished by the coupling device. Vice versa, when the pedal stroke is interrupted and therefore there is no transmission of power, the freewheel body 102 remains still and the central body 3 can rotate freely in idle mode by effect of the triangular configuration of the teeth 110, which cause each of the coupling elements 105 to slide with a reciprocating motion along the respective seat 109, against the thrust means 106. In this manner, the coupling elements 105 are forced to pass over the teeth of the crown gear 107, thus enabling the central body 3, and therefore the driving wheel of which the body 3 is an integral part, to continue to rotate in neutral with respect to freewheel body 102 in the direction of travel of the bicycle.

It is evident that, according to the particular and advantageous configuration and arrangement of the teeth 110 and of the seats 109 described above, the coupling elements 105 can be subjected to a shear force and not a compression force during the power transmission phase, that is, when the coupling elements 105 are engaged with a respective tooth 110 and the freewheel body 102 rotates as one with the central body 3.

From the above description, it thus appears evident that the present invention achieves the initially foreseen objectives and advantages: in fact, the invention discloses a hub for bicycle wheels having improved operating characteristics with respect to the solutions belonging to the prior art.

In fact, the substitution of the oscillating movement of the prior art solutions with a translation movement of the coupling elements 105, together with the particular configuration of the teeth 110, makes it possible to reduce appreciably the angle of engagement from one tooth to the next, thereby reducing the play in the idle rotation of the freewheel body 102 before the coupling elements 105 come into engagement with a tooth 110, that is, at the resumption of the pedal stroke. This makes it possible to have a more reactive pedal stroke, thus improving the performance of the bicycle.

Moreover, the fact that the coupling elements 105 can be subjected to shear forces during the power transmission instead of to an axial head load makes it possible to considerably increase the reliability and duration of the same coupling elements.

Naturally, the present invention is open to many applications, modifications or variants without thereby departing from the scope of patent protection, as defined by the accompanying claim 1.

Moreover, the materials and equipment used to implement the present invention, as well as the shapes and dimensions of the individual components, may be the most suitable for the specific requirements.

## Claims

1. A hub for bicycle wheels comprising a free-wheel body (102) adapted to be coupled to a central body (3) by means of a coupling device comprising one or more coupling members (105) associated to said free-wheel body (102) and engageable with respective teeth (110) of a crown gear (107) integral with said central body (3), thrust means (106) being provided to maintain said coupling members (105) engaged with said teeth (110), **characterized in that** said coupling members (105) are slidably accommodated into respective rectilinear seats (109) provided in said free-wheel body (102), said coupling members (105) being adapted to slide along said seats (109) against the action of said thrust means (106) between an engagement position and a disengagement position with respect to said teeth (110).

2. A hub as in claim 1, wherein said free-wheel body (102) comprises a disc (108), said rectilinear seats (109) being peripherally provided on said disc (108).

3. A hub as in claim 1, wherein each of said teeth (110) is shaped as an isosceles triangle so as to form an angle of essentially 90° with an adjacent tooth.

4. A hub as in claim 1, wherein said coupling members (105) are formed by blocks having an elongated parallelepiped shape.

5. A hub as in claims 3 or 4, wherein the longitudinal axis of said seats (109) is inclined in respect to said crown gear (107) such that the head surface of each of said coupling members (105) abuts against a side surface of a respective engaged tooth (110) and a side portion of each of said coupling members (105) adjacent said head surface abuts against a side of a tooth (110) adjacent said tooth (110) engaged by said head surface.

6. A hub as in claim 5, wherein said coupling members (105) are subjected to a shearing stress when in said engagement position with said teeth (110).

7. A hub as in claim 1, wherein said thrust means (106) consist of one or more elastically deformable elements.

8. A hub as in claim 7, wherein said elastically deformable elements consist of compression springs, each of said compression springs acting on a respective coupling member (105) at a side opposite said teeth (110).

9. A hub as any of preceding claims, wherein a rotary motion imparted to said free-wheel body (102) is transferred to said central body (3) when said coupling members (105) are in said engagement position with said teeth (110), while in absence of any rotary motion imparted to said free-wheel body (102), said coupling members (105) are pushed to said disengagement position by said teeth (110) which impart a reciprocating sliding motion to said coupling members (105) along said seats (109) against the action of said thrust means (106), whereby said central body (3) is allowed to rotate idle in respect to said free-wheel body (102).
